(19) Europäisches Patentamt
European Patent Office
Office européen des brevets

(11) Publication number: **0 185 118 B1**

(12) # EUROPEAN PATENT SPECIFICATION

(45) Date of publication of patent specification: **20.09.95**

(51) Int. Cl.[6]: **C08G 59/08**, C08L 63/02

(21) Application number: **84116126.8**

(22) Date of filing: **21.12.84**

The file contains technical information submitted after the application was filed and not included in this specification

(54) **A method for coating a substrate with a coating film.**

(43) Date of publication of application:
**25.06.86 Bulletin 86/26**

(45) Publication of the grant of the patent:
**20.09.95 Bulletin 95/38**

(84) Designated Contracting States:
**DE FR GB IT NL**

(56) References cited:
**DE-B- 1 295 823**
**DE-C- 1 138 542**
**GB-A- 813 972**
**DE-B- 2 521 813**
**GB-A- 794 647**
**GB-A- 991 054**

(73) Proprietor: **DAINIPPON INK AND CHEMICALS, INC.**
**35-58, Sakashita 3-chome**
**Itabashi-ku, Tokyo 174 (JP)**

(72) Inventor: **Sekiguchi, Hisashi**
**5-6-10, Ohmiyadai**
**Chiba-shi**
**Chiba-ken (JP)**
Inventor: **Kobayashi, Norio**
**1-22-7, Kotehashidai**
**Chiba-shi**
**Chiba-ken (JP)**
Inventor: **Ohgishi, Hideo**
**Higashi 4-4**
**Tatsumidai**
**Ichihara-shi**
**Chiba-ken (JP)**

(74) Representative: **DIEHL GLAESER HILTL & PARTNER**
**Patentanwälte**
**Postfach 19 03 65**
**D-80603 München (DE)**

EP 0 185 118 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a novel and useful method for coating a substrate with a coating film of an epoxy resin composition having excellent handling properties, mechanical properties, heat resistance, corrosion resistance and particularly excellent low-temperature curability.

The epoxy resin is one of the important industrial materials supporting the modern industry and is very useful in a wide range of applications, for example in paints, adhesives, electrical applications or civil engineering applications because it gives a composition having excellent properties including excellent adhesive properties, water resistance, chemical resistance, electrical insulating properties, heat resistance and dimensional stability.

Such an epoxy resin composition is generally composed of an epoxy resin prepared from a diphenol typified by bisphenol A and an epoxy group-introducing compound typified by epichlorohydrin and a curing agent typified by a polyamine compound, a phenolic resin or an acid anhydride as principal ingredients optionally in combination with a third substance typified by a pigment such as talc, and is used in many applications. Methods of curing these epoxy resins may be divided into those of the room temperature drying type by which the epoxy resins are dried and cured by simply leaving them to stand under natural conditions without the application of any external factor such as heating, and those of the oven drying type by which the drying and curing of the epoxy resins is promoted by applying physical or chemical means such as heat or pressure as external factors either singly or in combination.

With epoxy resins of the oven drying type, it is not so difficult, but rather relatively easy, to set up constant stable drying and curing conditions always irrespective of geographical or climatic differences by maintaining external physical factors under constant conditions. The oven drying type epoxy resins are desired to have low temperature curability because energy saving or increased productivity can be achieved by reducing external physical factors such as heat.

With regard to the room temperature drying type epoxy resins, the natural conditions are directly the drying and curing conditions. Since many factors including the atmospheric temperature, humidity and the air current incessantly vary, it is difficult to control the drying and curing operation by man's power. In practice, there are many occasions when natural drying and curing is required, for example in coating, adhesion, electrical and civil engineering applications. In particular, most of epoxy-based "heavy duty paints" used as anticorrosive paints for large-scale steel structures require operations under natural drying and curing conditions.

In these fields, steel materials may be coated and then assembled, or they may be assembled and then coated. Methods of coating conforming to the individual process steps are prescribed. Particularly, when the steel materials are large in size and irregular in shape and are not produced in large quantities in the same size and shape, there is no way, for economic reasons, but to utilize the-natural phenomena directly as drying and curing conditions after coating. The same can be said with regard to paints or adhesives for steel pipes, bridges, large-sized vehicles, aircraft, buildings, and roads.

Most of epoxy resins to be utilized by curing under natural drying and curing conditions are combined with amine-type curing agents. The greatest defect of a composition composed of an epoxy resin and an amine-type curing agent, however, is a poor low-temperature curability, and in some cases, the composition does not at all cure at low temperatures.

Attempts have been made to solve the problem of low-temperature curability by, for example, using (1) a curing accelerator, (2) a thiokol-type curing agent which can react even at low temperatures, (3) an ester-type epoxy resin, (4) an epoxy-urethane system, or (5) a novolak-type epoxy resin. Such methods have been used by utilizing their respective advantages, but have the following defects:

According to the method (1), a catalyst which catalyzes the ring-opening reaction of an epoxy groups and an amino or imino group, such as a tertiary amine, a phenolic compound or an acidic compound, is used as the curing accelerator. This method is available only at temperatures of 20 °C at the lowest. It has the defect that the accelerator acts as a deleterious factor on the various properties of the cured product and that when the temperature goes down to 5 °C or to a point below the freezing point, the effect is not observed, and the accelerator itself remains in the cured product.

The curing agent in the method (2) basically utilizes the reaction of an epoxy group with a mercapto group. By using it properly in combination with the curing accelerator in (1), the resulting composition shows excellent curability such that it rapidly cures even at temperatures below the freezing point. On the other hand, the use of this curing agent leads to a loss of many properties expected of an epoxy resin, such as adhesive properties and chemical resistance. Hence, this method is of little practical value, too.

The ester-type epoxy resin in the method (3) readily reacts with the amino group at low temperatures. If it is used in combination with a suitable curing accelerator, a great improvement in low-temperature

curability can be expected. Since, however, many ester linkages exist in the cured product as a result of using this method, the inherent properties of the epoxy resin such as water resistance and alkali resistance will be degraded.

According to the method (4), the epoxy resin is cured by an isocyanate curing agent by utilizing the hydroxyl groups therein (or increased hydroxyl groups obtained by modifying the resin further) while retaining the unique structure of the epoxy resin. This method is actually used for curing epoxy resins at low temperatures. But the epoxy resin is liable to foam and generate gas during curing at high humidity. Furthermore, as a result of the decrease of the hydroxyl groups in the cured product, its adhesive properties are degraded and its corrosion resistance during long-term use becomes poor. Furthermore, top coating must be performed at short intervals. Thus, the cured product is very defective in respect of properties other than low-temperature curability as compared with general-purpose room temperature curable epoxy-amine systems.

The method (5) contemplates the use of a novolak-type epoxy resin obtained by reacting a novolak resin prepared from phenol or cresol and formaldehyde, with epichlorohydrin. A composition comprising this epoxy resin and a curing agent has excellent low-temperature curability and improved heat resistance, but suffers from the defect that its adhesion to an iron surface or to the surfaces of other materials is poor and it is immiscible with polyamide-type curing agents.

In DE-B-2521813 there is disclosed a process for preparing epoxy resins by reacting a polyglycidyl ether with a compound having phenolic hydroxy groups. However, in order to cure said epoxy resins it is necessary to heat the epoxy resins to a temperature of 140 to 200 °C. These epoxy resins do not cure at low temperature.

In DE-C-1138542 there are described molding compositions which are also cured by heat and pressure. The compositions are mixed with a basic curing agent at a temperature of 120 °C and subsequently treated at a temperature of 170 °C in order to obtain useful articles.

From GB-A-794647 there was known a resinous compound comprising a reaction product of an aromatic hydrocarbon-aldehyde resin and an epoxy resin. The known compositions are thermosetting copolymers which must be baked for curing at a temperature of 175 °C in the presence of phosphoric acid as a curing agent.

Under these circumstances, it has been strongly desired to develop an epoxy resin which retains and improves the inherent properties of a composition composed of a bisphenol A-type epoxy resin and a curing agent therefor and excellent low-temperature curability. Such a resin would give a good solution to the problem of shortening the drying time as compared with conventional room temperature drying and curing type coating compositions not only at low temperatures but also under relatively mild climatic conditions with higher room temperatures.

As a solution which can meet the above earnest desire held over years, the present invention is using an epoxy resin composition having excellent handling properties, mechanical properties, heat resistance, corrosion resistance and particularly excellent low-temperature curability, said epoxy resin composition comprising as essential ingredients

(A) a polyfunctional epoxy resin having an epoxy equivalent of 180 to 1,800 and a molecular weight of 250 to 5,000 obtained by reacting

(a-1) an epoxy resin having an epoxy equivalent of 100 to 800 and a molecular weight of 200 to 2,000 as well as containing about 2 glycidyl ether groups derived from a diphenol compound having difunctional phenolic hydroxyl groups per molecule, with

(a-2) a molecular weight increasing agent in form of a polyhydric phenol, and

(B) a curing agent for the polyfunctional epoxy resin (A),

wherein

- there is used a molecular weight increasing agent (a-2) containing 2.1 to 10 phenolic hydroxyl groups per molecule and having a molecular weight of 200 to 2,000;
- the portions of the epoxy resin (a-1) and of the molecular weight increasing agent (a-2) are selected such that the number of the phenolic hydroxyl groups in the molecular weight increasing agent (a-2) is less than 1 per epoxy group in the epoxy resin (a-1);
- as the curing agent (B) for the polyfunctional epoxy resin (A) there is used an amine-type curing agent;

characterized in that

- there is used a polyfunctional epoxy resin (A) which does not gel;
- the drying and curing of the epoxy resin composition is carried out at room temperature; and as the curing agent (B) there is used a preliminary co-condensation product of triethylenetetramine and "EPICLON 1050-75X" being an epoxy resin with an epoxy equivalent of 475.

More specifically, this invention provides the use of a composition comprising (A) a polyfunctional epoxy resin obtained by using a novolak resin derived from a phenol compound, a novolak resin derived from a diphenol compound or a xylene resin modified with phenol, a substituted phenol or a novolak resin, and (B) an amine-type curing agent for the epoxy resin as essential components.

In the present invention, the polyfunctional epoxy resin (A) denotes a resin having an epoxy equivalent of 180 to 1,800 and a molecular weight of 250 to 5,000. The resin is obtained by reacting (a-1) an epoxy resin having an epoxy equivalent of 100 to 800 and a molecular weight of 200 to 2,000, preferably an epoxy equivalent of 160 to 700 and a molecular weight of 250 to 1,800 and containing about 2 glycidyl ether groups derived from a diphenol compound having difunctional phenolic hydroxyl groups per molecule typified by bisphenol A or bisphenol F, with (a-2) a molecular weight increasing agent containing 2.1 to 10 phenolic hydroxyl groups on an average per molecule and having a molecular weight of 200 to 2,000, which is a polyhydric phenol having 2.1 to 10, preferably 2.3 to 6, phenolic hydroxyl groups per molecule, in such proportions that the number of the phenolic hydroxyl groups in the molecular weight increasing agent (a-2) is less than 1, preferably 0.05 to 0.8, per epoxy group in the epoxy resin (a-1) and the resulting polyfunctional epoxy resin (A) does not gel.

The diphenol compound denotes all compounds having about 2 phenolic hydroxyl groups per molecule and includes, for example, compounds represented by the general formula

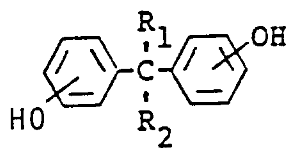

[I]

wherein each of $R_1$ and $R_2$ represents a hydrogen atom or an alkyl or alkenyl group, such as bisphenol A, bisphenol F or isomers thereof;
hydroxyphenylalkanes resulting from substitution of the benzene ring in general formula [I] by a halogen atom such as chlorine or bromine or an alkyl group; dihydroxybenzenes represented by the general formula

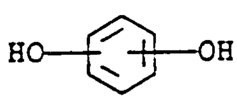

[II]

and their nuclearly alkylated or halogenated products.

The diglycidyl ether-type epoxy resin (a-1) having about 2 glycidyl ether groups per molecule is obtained by a known method from the diphenol compound and an epoxy group-introducing substance such as epichlorohydrin, epibromohydrin or methylepichlorohydrin. An epoxy resin (called DGEBPA) obtained by using bisphenol A (BPA) as the diphenol compound is most general.

Firstly, the molecular weight increasing agent (a-2) includes, for example, a novolak resin respresented by the following general formula

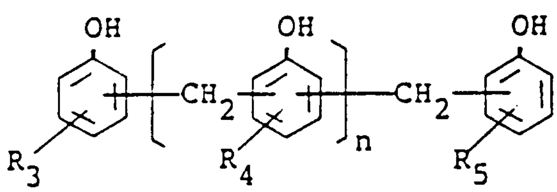

[III]

wherein each of $R_3$, $R_4$ and $R_5$ represents a hydrogen atom or an alkyl group such as methyl, ethyl, n-butyl, t-butyl, octyl or nonyl or an alkenyl group, and n is a rational number of 0.1 to 8,
which is obtained from a monophenol compound such as phenol or an alkylphenol and formaldehyde, or from a diphenol compound and formaldehyde. Secondly, there may be cited a modified phenolic resin obtained by modifying a xylene resin with phenol, a substituted phenol or a novolak resin. These resins should contain 2.1 to 10 functional groups on an average per molecule.

The novolak resin of general formula [III] is usually obtained as a mixture of compounds of this formula in which n is 0, 1, 2, 3,..... The rational number n of 0.1 to 8 in general formula [III] means an average value of the mixture.

The proportions of the diglycidyl ether-type epoxy resin (a-1) and the molecular weight increasing agent (a-2) used in preparing the polyfunctional epoxy resin (A) are never arbitrary, but should be such that not more than 1, preferably 0.05 to 0.8, phenolic hydroxyl group in (a-2) is used per epoxy group in the resin (a-1). In addition, since the limitation of the proportions of the compounds (a-1) and (a-2) is set on the basis of the number n in general formula [III] and the phenolic hydroxyl groups present in the molecule, the proportions should be within the range in which gellation does not occur.

The polyfunctional epoxy resin (A) is obtained by reacting the epoxy resin (a-1) with the molecular weight increasing agent (a-2) in the limited proportions described above in the presence of a known conventional catalyst such as sodium hydroxide or a tertiary amine and heating the mixture to react the epoxy groups of the epoxy resin (a-1) with the phenolic hydroxyl groups of the molecular weight increasing agent (a-2).

The low-temperature curability of the resulting epoxy resin depends upon the number of the functional groups of the polyfunctional epoxy resin (A) so obtained, and therefore, the combination of the epoxy resin (a-1) and the molecular weight increasing agent (a-2) is the most important factor. Specifically, by causing the number of the functional groups of the polyfunctional epoxy resin (A) to infinitely approach 2, the factor of low-temperature curability is infinitely decreased.

On the basis of this information, the "polyfunctional" as used in this invention denotes at least 2.1 functional groups on an average, and not more than 10 functional groups on an average in view of workability, in order to obtain practical low-temperature curability which meets the object of this invention.

The curing agent (B) for the epoxy resin is an amine-type curing agent, namely a preliminary co-condensation product of triethylenetetramine and "EPICLON 1050-75X" being an epoxy resin with an epoxy equivalent of 475.

By using the polyfunctional epoxy resin (A) and the curing agent (B) as essential ingredients, the required properties such as handling properties, hardness, water resistance, and corrosion resistance can be obtained early in natural room temperature curing and drying. In particular, since the dryability of the resin in the winter time or in cold districts is good, the range of application of the epoxy resin composition can be widened greatly.

As required, the compositions of this invention may include organic compounds such as curing accelerators, solvents, diluents, bitumens and petroleum resins and inorganic substances such as glasses, carbons, pigments (e.g. titanium oxide, talc and silica) or fibers.

The commercial name "Epiclon" as used in connection with this invention is a registered trademark. The commercial name "Nikkanol" is not a registered trademark, as known so far.

The following Referential Examples, Examples and Comparative Examples illustrate the present invention in greater detail. All parts and percentages are by weight unless otherwise indicated.

The epoxy equivalents given hereinafter were measured for solid matter.

Referential Examples 1 to 4

Preparation of polyhydric phenols as the molecular weight increasing agent (a-2):

In each run, the monophenol compound and 37% formalin shown in Table 1 were used in the, amounts indicated and reacted at 80 °C for 4 hours in the presence of 0.3 g of hydrochloric acid. The reaction mixture was then neutralized to a pH of 7.5 by using a 10% aqueous solution of sodium hydroxide. The excess of the monophenol compound was distilled off with steam until it was no longer substantially detected.

Thus, the various novolak resin having the properties shown in Table 1 were obtained.

Table 1

| | Referential Example 1 | Referential Example 2 | Referential Example 3 | Referential Example 4 |
|---|---|---|---|---|
| Monophenol compound | o-Cresol 108 g | Phenol 90 g | Phenol 90 g | Phenol 90 g |
| 37% Formalin | 40.5 g | 40.5 g | 32.4 g | 52.7 g |
| Melting point ($^{o}C$) | 76 | 73 | 68 | 78 |
| Average number of functional groups | 3.5 | 3.5 | 2.7 | 4.5 |
| Designation of the polyhydric phenol | a-2-1 | a-2-2 | a-2-3 | a-2-4 |

Referential Example 5

Preparation of a polyfunctional epoxy resin (A):

A 1-liter four-necked flask equipped with a stirrer, a nitrogen introducing tube, a thermometer and a condenser was charged with 190 g of "EPICLON 850" (an epoxy resin having an epoxy equivalent of 190 obtained from bisphenol A and epichlorohydrin, a product of Dainippon Ink and Chemicals, Inc.) and 22.1 g

of the phenol resin (a-2-1) (namely in such proportions that the number of phenolic hydroxyl groups was 0.18 per epoxy group). Then, 0.4 g of a 1% aqueous solution of sodium hydroxide was added, and the charged materials were reacted at 140 °C for 5 hours. Methyl isobutyl ketone (90.9 g) was added to obtain the desired resin (A). The product was a resin solution having a non-volatile content of 70%, and the resin had an epoxy equivalent of 260. It is abbreviated as the resin (A-1).

Referential Example 6

Preparation of a polyfunctional epoxy resin (A):

In the same way as in Referential Example 5, 170 g of "EPICLON 830" (an epoxy resin having an epoxy equivalent of 170 obtained from bisphenol F and epichlorohydrin, a product of the aforesaid company) and 22.1 g of the phenol resin (a-2-2) were used (namely in such proportions that the number of phenolic hydroxyl groups was 0.21 per epoxy group). Furthermore, 0.4 g of a 1% aqueous solution of sodium hydroxide was added, and the charged materials were reacted at 140 °C for 4 hours. Then, 82.3 g of methyl isobutyl ketone was added to obtain the desired resin (A). The product was a resin solution having a non-volatile content of 69.8%, and the resin had an epoxy equivalent of 243. It is abbreviated as the resin (A-2).

Referential Example 7

Preparation of a polyfunctional epoxy resin (A):

A solution having a nonvolatile content of 70.5% of the desired resin (A) having an epoxy equivalent of 300 was prepared by the same method as in Referential Example 6 except that 33.7 g of the phenol resin (a-2-3) was used instead of the polyhydric phenol (a-2-2) (namely in such proportions that the number of phenolic hydroxyl groups was 0.21 per epoxy group), and the amount of methyl isobutyl ketone was changed to 87.3 g. It is abbreviated as the resin (A-3).

Referential Example 8

A solution having a nonvolatile content of 70.8% of the desired resin (A) having an epoxy equivalent of 238 was prepared in the same way as in Referential Example 7 except that the same amount of the phenol resin (a-2-4) was used instead of the polyhydric phenol (a-2-3) (namely in such proportions that the number of the phenolic hydroxyl groups was 0.21 per epoxy group). It is abbreviated as the resin (A-4).

Referential Example 9

Preparation of a polyfunctional epoxy resin (A):

In the same way as in Referential Example 5, 260 g of "EPICLON 860" (an epoxy resin having an epoxy equivalent of 260 obtained from bisphenol A and epichlorohydrin, a product of the aforesaid company) and 41.4 g of the phenol resin (a-2-1) were charged (namely in such proportions that the number of phenolic hydroxyl groups was 0.35 per epoxy group), and reacted at 160 °C for 5 hours in the presence of 0.6 g of a 1% aqueous solution of sodium hydroxide. Then, 100.5 g of methyl isobutyl ketone and 100.3 g of xylene were added to obtain a solution having a non-volatile content of 60.5% of the desired resin (A) having an epoxy equivalent of 465. It is abbreviated as the resin (A-5).

Referential Example 10

Preparation of a polyfunctional epoxy resin (A):

A solution having a non-volatile content of 59.8% of the desired resin (A) having an epoxy equivalent of 470 was prepared in the same way as in Referential Example 9 except that the same amount of the phenol resin (a-2-2) was used instead of the polyhydric phenol (a-2-1) (namely in such proportions that the number of phenolic hydroxyl groups was 0.39 per epoxy resin). The product is abbreviated as the resin (A-6).

Referential Example 11

Preparation of an amino group-containing compound as a curing agent (B):

A four-necked flask equipped with a stirrer, a nitrogen introducing device, a dropping funnel and a thermometer was charged with 100 g of triethylenetetramine. While the inside of the flask was purged with nitrogen gas, the temperature was raised to 80 ° C. when this temperature was reached, 75 g of "EPICLON 1050-75X" (an epoxy resin having an epoxy equivalent of 475, 75% xylene solution, a product of Dainippon Ink and Chemicals, Inc.) was added dropwise over 2 hours. The temperature was further raised to 100 ° C, and the mixture was further stirred for 2 hours. The reaction mixture was distilled under reduced pressure to remove the remaining triethylenetetramine. Then, 53.8 g of toluene and 53.8 g of n-butanol were added to obtain a solution of the desired compound having an amine value of 380 and an active hydrogen equivalent of 125.

Examples 1 to 18 and Comparative Examples 1 to 6

Resin compositions of this invention and control resin compositions were prepared by using the polyfunctional epoxy resins (A) obtained in Referential Examples 5 to 10 and the amino group-containing compound obtained in Referential Example 11 in the mixing proportions (solids weight proportions) shown in Tables 2 to 4 and mixing them with stirring in a customary manner.

In the preparation of the control resin compositions, commercially available "EPICLON 860" and "EPICLON 1050" (epichlorohydrin bisphenol A-type epoxy resins having an epoxy equivalent of 475, products of the aforesaid company) were used instead of the polyfunctional epoxy resin (A).

Coated films were formed from these resin compositions by the following procedures, and their mechanical properties, corrosion resistance and low-temperature curability were evaluated. The results are summarized in Tables 2 to 4.

1) Coating substrate

A cold rolled steel plate (0.8 x 70 x 150 mm) stipulated in JIS G-3141 which was cleaned by the method stipulated in JIS K-5400-1970, 3.3: (3).

2) Coating method

Each of the coating resin compositions was coated on the above substrate by the method of JIS K-5400-1970, 3.5: (1) so that the thickness of the coated film after drying was 100±3 µm in a clear film test (namely, a test on coatings which do not contain any pigment; Table 2), and 300±20 µm in an enamel film test (see Table 3) and a tar enamel film test (see Table 4) (namely, tests on coatings which contain a pigment).

3) Drying of the coated film

The coated film was dried for 7 days in a constant temperature chamber kept at 25 ° C. Only when coated films were prepared for a low-temperature curability test and a walkable test, the coated films were dried in a constant temperature chamber at 5 ° C immediately after coating.

4) Testing methods and evaluation

4-1) Moisture resistance test and salt spray test

These tests were performed in a customary manner using a conventional moisture resistance tester and a conventional salt spray tester, and the degree of change in the coated film after each test as compared with that before the test was visually observed and evaluated.

4-2) Crosshatch adhesion test (crosscut test)

By providing 11 cuts longitudinally and laterally at intervals of 1 mm on the coated film by means of a razor edge, 100 square sections were made. A cellophane tape was bonded to the cut portions and strongly

peeled off.

4-3) Pencil hardness

Evaluated after drying at 25°C for 24 hours in accordance with JIS K-5401 (1969).

4-4) Low-temperature curability

Evaluated after leaving the coated film to stand at 5°C for 16 hours in accordance with JIS K-5400-1970, 5, 10: (2) (b).

4-5) Walkable test on plate after 16 hour drying

The coated film was dried at 5°C for 16 hours, and then the coated surface was stamped with shoes (load about 60 kg) to determine whether walking was possible or not.

Table 2

| | | | Example | | | | | | Comparative Example | |
|---|---|---|---|---|---|---|---|---|---|---|
| | | | 1 | 2 | 3 | 4 | 5 | 6 | 1 | 2 |
| Mixing proportions | Epoxy resin used | Designation | A-1 | A-2 | A-3 | A-4 | A-5 | A-6 | EPICLON 860 | EPICLON 1050 |
| | | Amount | 100 | | | | | | 100 | |
| | Amino group-containing Compound | Amount | 48 | 51 | 42 | 53 | 27 | 27 | 48 | 27 |
| Properties of the coated film | Salt spray test | | Acceptable | | | | | | Acceptable | |
| | Moisture resistance test | | Acceptable | | | | | | Acceptable | |
| | Crosshatch adhesion test | | Acceptable | | | | | | Acceptable | |
| | Low-temperature curability | | Acceptable | | | | | | Unacceptable | |
| | Walkable test | | Acceptable | | | | | | Unacceptable | |
| | Pencil hardness | After 1 day | 6B | | | | | | Softer than 6B | |
| | | After 3 days | 4B | | | | | | 6B | Softer than 6B |
| | | After 7 days | HB | | | | | | H | 2B |

Table 3

| | | | Example | | | | | | Comparative Example | |
|---|---|---|---|---|---|---|---|---|---|---|
| | | | 7 | 8 | 9 | 10 | 11 | 12 | 3 | 4 |
| Mixing proportions | Poly-functional epoxy resin | Designation | A-1 | A-2 | A-3 | A-4 | A-5 | A-6 | EPICLON 860 | EPICLON 1050 |
| | | Amount | 100 | | | | | | 100 | |
| | Amount of the amino group-containing compound | | 48 | 51 | 42 | 53 | 27 | 27 | 48 | 27 |
| | Amount of talc | | 49 | 50 | 47 | 51 | 42 | 42 | 49 | 42 |
| | Amount of silica | | 49 | 50 | 47 | 51 | 42 | 42 | 49 | 42 |
| Properties of the coated film | Salt spray test | | Acceptable | | | | | | Acceptable | |
| | Moisture resistance test | | Acceptable | | | | | | Acceptable | |
| | Crosshatch adhesion test | | Acceptable | | | | | | Acceptable | |
| | Low-temperature curability | | Acceptable | | | | | | Unacceptable | |
| | Walkable test | | Acceptable | | | | | | Unacceptable | |
| | Pencil hardness | After 1 day | 5B | | | | | | Softer than 6B | |
| | | After 3 days | HB | | | | | | 3B | 4B |
| | | After 7 days | H | | | | | | HB | B |

Table 4

| | | | Example | | | | | | Comparative Example | |
|---|---|---|---|---|---|---|---|---|---|---|
| | | | 13 | 14 | 15 | 16 | 17 | 18 | 5 | 6 |
| Mixing proportions | Poly-functional epoxy resin | Designation | A-1 | A-2 | A-3 | A-4 | A-5 | A-6 | EPICLON 860 | EPICLON 1050 |
| | | Amount | 100 | | | | | | 100 | |
| | Amount of the amino group-containing compound | | 48 | 51 | 42 | 53 | 27 | 27 | 48 | 27 |
| | Amount of tar pitch | | 197 | 201 | 189 | 204 | 169 | 169 | 197 | 169 |
| | Amount of talc | | 148 | 151 | 142 | 153 | 127 | 127 | 148 | 127 |
| Properties of the coated film | Salt spray test | | Acceptable | | | | | | Acceptable | |
| | Moisture resistance test | | Acceptable | | | | | | Acceptable | |
| | Crosshatch adhesion test | | Acceptable | | | | | | Acceptable | |
| | Low-temperature curability | | Acceptable | | | | | | Unacceptable | |
| | Walkable test | | Acceptable | | | | | | Unacceptable | |
| | Pencil hardness | After 1 day | Softer than 6B | | | | | | Sticky | |
| | | After 3 days | 5B | | | | | | Softer than 6B | Sticky |
| | | After 7 days | 2B | | | | | | 5B | Softer than 6B |

Referential Example 12

Preparation of a polyhydric phenol as a molecular weight increasing agent (a-2):

Bisphenol A (228 g) was dissolved in 70 g of hot water, and 12 g of a 20% aqueous solution of oxalic acid was added. The temperature was raised to 100°C, and 41.5% formalin was added dropwise. The mixture was maintained at this temperature for 6 hours. Dehydration was carried out over 3 hours so that finally the temperature reached 180°C to obtain a bisphenol A-derived novolak resin having a melting point of 110°C and a phenolic hydroxyl group equivalent of 120 and containing 6.0 functional groups on an average. It is abbreviated as the polyhydric phenol (a-2-5).

Referential Example 13

Preparation of a polyfunctional epoxy resin (A):

A solution having a nonvolatile content of 60.2% of the desired resin (A) having an epoxy equivalent of 320 was prepared in the same way as in Referential Example 10 except that 16.3 g of the polyhydric phenol (a-2-5) was used instead of the polyhydric phenol (a-2-2) (namely in such proportions that the number of phenolic hydroxyl groups was 0.14 per epoxy group). It is abbreviated as the resin (A-7).

Referential Example 14

Preparation of a polyfunctional epoxy resin (A):

A solution having a nonvolatile content of 59.8% of the desired resin (A) having an epoxy equivalent of 300 was prepared in the same way as in Referential Example 13 except that 15.7 g of "NIKKANOL P-100" (phenol-modified xylene resin having a phenolic hydroxyl group equivalent of 194 and a molecular weight of 800 and containing 4.1 functional groups on an average, a product of Mitsubishi Gas Chemical Company, Inc.) was used instead of the polyhydric phenol (a-2-5) (namely in such proportions that the number of the phenolic hydroxyl groups was 0.08 per epoxy group). It is abbreviated as the resin (A-8).

Referential Example 15

In the same way as in Referential Example 5, 190 g of "EPICLON 850", 65.5 g of bisphenol A and 0.5 g of a 1% aqueous solution of sodium hydroxide were reacted at 140°C for 4 hours to obtain an intermediate diglycidyl ether having an epoxy equivalent of 600, and then the polyhydric phenol (a-2-1) as a molecular weight increasing agent was added in such a proportion that the number of the phenolic hydroxyl groups became 0.15 per 0.43 epoxy group. The reaction was carried out at 160°C for 7 hours. Then, 90.4 g of methyl isobutyl ketone and 90.4 g of xylene were added to obtain a solution having a nonvolatile content of 59.6% of the resin (A) having an epoxy equivalent of 980. It was abbreviated as the resin (A-9).

Examples 19 to 27

In the same way as in Examples 1 to 18 and Comparative Examples 1 to 6, resin compositions were obtained, and coated films were formed from them and evaluated. The results are summarized in Table 5.

Examples 19 to 21 show clear paints, Examples 22 to 24 enamels, and Examples 25 to 27 tar epoxy paints.

Table 5

| | | Example 19 | Example 20 | Example 21 | Example 22 | Example 23 | Example 24 | Example 25 | Example 26 | Example 27 |
|---|---|---|---|---|---|---|---|---|---|---|
| Mixing proportions | Epoxy resin – Designation | A-7 | A-8 | A-9 | A-7 | A-8 | A-9 | A-7 | A-8 | A-9 |
| Mixing proportions | Epoxy resin – Amount | 100 | | | 100 | | | 100 | | |
| Mixing proportions | Amount of the amino group-containing compound | 39 | 42 | 13 | 39 | 42 | 13 | 39 | 42 | 13 |
| Mixing proportions | Amount of silica | | | | 46 | 47 | 38 | | | |
| Mixing proportions | Amount of talc | | | | 46 | 47 | 38 | 139 | 142 | 113 |
| Mixing proportions | Amount of tar pitch | | | | | | | 85 | 189 | 51 |
| Properties of the coated film | Salt spray test | Acceptable | | | Acceptable | | | Acceptable | | |
| Properties of the coated film | Moisture resistance test | Acceptable | | | Acceptable | | | Acceptable | | |
| Properties of the coated film | Crosshatch adhesion test | Acceptable | | | Acceptable | | | Acceptable | | |
| Properties of the coated film | Low-temperature curability | Acceptable | | | Acceptable | | | Acceptable | | |
| Properties of the coated film | Walkable test on plate after 16 hour drying | Acceptable | | | Acceptable | | | Acceptable | | |
| Properties of the coated film | Pencil hardness – After 1 day | 6B | | | 5B | | | Softer than 6B | | |
| Properties of the coated film | Pencil hardness – After 3 days | 4B | | | HB | | | 5B | | |
| Properties of the coated film | Pencil hardness – After 7 days | HB | | | H | | | 2B | | |

The results shown in the above Examples demonstrate the excellent low-temperature curability and also other excellent properties including corrosion resistance of the compositions of this invention.

## Claims

1. A method for coating a substrate with a coating film of an epoxy resin composition having excellent handling properties, mechanical properties, heat resistance, corrosion resistance and particularly excellent low-temperature curability, said epoxy resin composition comprising as essential ingredients
   (A) a polyfunctional epoxy resin having an epoxy equivalent of 180 to 1,800 and a molecular weight of 250 to 5,000 obtained by reacting
      (a-1) an epoxy resin having an epoxy equivalent of 100 to 800 and a molecular weight of 200 to 2,000 as well as containing about 2 glycidyl ether groups derived from a diphenol compound having difunctional phenolic hydroxyl groups per molecule, with
      (a-2) a molecular weight increasing agent in form of a polyhydric phenol, and
   (B) a curing agent for the polyfunctional epoxy resin (A),
   wherein
   - there is used a molecular weight increasing agent (a-2) containing 2.1 to 10 phenolic hydroxyl groups per molecule and having a molecular weight of 200 to 2,000;
   - the portions of the epoxy resin (a-1) and of the molecular weight increasing agent (a-2) are selected such that the number of the phenolic hydroxyl groups in the molecular weight increasing agent (a-2) is less than 1 per epoxy group in the epoxy resin (a-1);
   - as the curing agent (B) for the polyfunctional epoxy resin (A) there is used an amine-type curing agent;

   characterized in that
   - there is used a polyfunctional epoxy resin (A) which does not gel;
   - the drying and curing of the epoxy resin composition is carried out at room temperature; and
   - as the curing agent (B) there is used a preliminary co-condensation product of triethylenetetramine and "EPICLON 1050-75X" being an epoxy resin with an epoxy equivalent of 475.

2. Method according to claim 1, wherein as the molecular weight increasing agent there is used a novolak resin obtained from phenol and/or a substituted phenol and formaldehyde.

3. Method according to claim 1, wherein as the molecular weight increasing agent there is used a novolak resin obtained from a diphenol compound and formaldehyde.

4. Method according to claim 1, wherein as the molecular weight increasing agent there is used a resin obtained by modifying a xylene resin with phenol, a substituted phenol or a novolak resin.

5. Method according to claim 1, wherein there is used a polyfunctional epoxy resin having an epoxy equivalent of 185 to 1,500 and a molecular weight of 250 to 4,000.

## Patentansprüche

1. Verfahren zum Beschichten von Substraten mit einem Beschichtungsfilm aus einer Epoxidharzzusammensetzung mit ausgezeichneten Gebrauchseigenschaften, mechanischen Eigenschaften, Wärmebeständigkeit, Korrosionsbeständigkeit und besonders ausgezeichneter Aushärtbarkeit bei niederen Temperaturen, wobei die Epoxidharzzusammensetzung als wesentliche Bestandteile
   (A) ein polyfunktionelles Epoxidharz mit einem Epoxyäquivalent von 180 bis 1800 und einem Molekulargewicht von 250 bis 5000, erhalten durch Umsetzen
      (a-1) eines Epoxidharzes mit einem Epoxyäquivalent von 100 bis 800 und einem Molekulargewicht von 200 bis 2000 und enthaltend ca. 2 Glycidylethergruppen, abgeleitet von einer Diphenolverbindung mit difunktionellen phenolischen Hydroxylgruppen pro Molekül, mit
      (a-2) einem molekulargewichterhöhenden Mittel in Form eines mehrwertigen Phenols, und
   (B) ein Härtungsmittel für das polyfunktionelle Epoxidharz (A)
   enthält, worin
   - ein das Molekulargewicht erhöhendes Mittel (a-2) verwendet wird, das 2,1 bis 10 phenolische Hydroxylgruppen pro Molekül enthält und ein Molekulargewicht von 200 bis 2000 aufweist;
   - die Anteile des Epoxidharzes (a-1) und des molekulargewichterhöhenden Mittels (a-2) so gewählt werden, daß die Anzahl der phenolischen Hydroxylgruppen in dem das Molekulargewicht erhöhenden Mittel (a-2) weniger als 1 pro Epoxidgruppe im Epoxidharz (a-1) beträgt;

- als Härtungsmittel (B) für das polyfunktionelle Epoxidharz (A) ein Härtungsmittel vom Amintyp verwendet wird;

dadurch gekennzeichnet, daß

- ein polyfunktionelles Epoxidharz (A) verwendet wird, das nicht geliert;
- das Trocknen und Härten der Epoxidharzzusammensetzung bei Raumtemperatur durchgeführt wird; und
- als Härtungsmittel (B) ein Vorcokondensationsprodukt aus Triethylentetramin und "EPILON 1050-75X", das ein Epoxidharz mit einem Epoxyäquivalent von 475 ist, verwendet wird.

**2.** Verfahren nach Anspruch 1, worin als molekulargewichterhöhendes Mittel ein Novolakharz, erhalten aus Phenol und/oder einem substituierten Phenol und Formaldehyd, verwendet wird.

**3.** Verfahren nach Anspruch 1, worin als molekulargewichterhöhendes Mittel ein Novolakharz, erhalten aus einer Diphenolverbindung und Formaldehyd, verwendet wird.

**4.** Verfahren nach Anspruch 1, worin als molekulargewichterhöhendes Mittel ein Harz, erhalten durch Modifizieren eines Xylolharzes mit Phenol, einem substituierten Phenol oder einem Novolakharz, verwendet wird.

**5.** Verfahren nach Anspruch 1, worin ein polyfunktionelles Epoxidharz mit einem Epoxyäquivalent von 185 bis 1500 und einem Molekulargewicht von 250 bis 4000 verwendet wird.

**Revendications**

**1.** Procédé de revêtement de substrats d'une pellicule d'une composition à base d'une résine époxyde ayant d'excellentes propriétés de manipulation, propriétés mécaniques, de résistance à la chaleur, à la corrosion et en particulier une excellente aptitude au durcissement à de basses températures, composition qui comprend comme ingrédients essentiels :

(A) une résine époxyde polyfonctionnelle ayant un équivalent d'époxyde de 180 à 1800 et une masse moléculaire de 250 à 5000, obtenue par réaction

(a-1) d'une résine époxyde avec un équivalent d'époxyde de 100 à 800 et une masse moléculaire de 200 à 2000 et avec par molécule environ deux groupes d'éther glycidylique provenant d'un composé diphénolique à hydroxyles phénoliques difonctionnels, avec

(a-2) un agent élevant la masse moléculaire, en un polyphénol, et

(B) un agent durcissant pour la résine époxyde polyfonctionnelle (A), composition dans laquelle :

- on utilise un agent (a-2) élevant la masse moléculaire qui a de 2,1 à 10 hydroxyles phénoliques par molécule et une masse moléculaire de 200 à 2000 ;
- on détermine les proportions de la résine époxyde (a-1) et de l'agent (a-2) pour que le nombre d'hydroxyles phénoliques de l'agent (a-2) soit inférieur à 1 par groupe époxy de la résine époxyde (a-1) ;
- on utilise un agent durcissant du genre amine comme agent (B) pour la résine époxyde polyfonctionnelle (A) ;

composition caractérisée en ce que :

- on utilise une résine époxyde polyfonctionnelle (A) qui ne se gélifie pas ;
- on effectue le séchage et le durcissement de la composition de résine époxyde à la température ambiante ; et
- on utilise comme agent durcissant (B) un produit de co-condensation préliminaire de triéthylènetétramine et du produit "EPICLON 1050-75X" qui est une résine époxyde avec un équivalent d'époxyde de 475.

**2.** Procédé selon la revendication 1 dans laquelle l'agent élevant la masse moléculaire est une résine de novolaque obtenue à partir de phénol et/ou d'un phénol substitué et de formaldéhyde.

**3.** Procédé selon la revendication 1 dans laquelle l'agent élevant la masse moléculaire est une résine de novolaque obtenue à partir d'un composé diphénolique et de formaldéhyde.

**4.** Procédé selon la revendication 1 dans laquelle l'agent élevant la masse moléculaire est une résine obtenue par modification d'une résine de xylène avec du phénol, un phénol substitué ou une résine de

novolaque.

5. Procédé selon la revendication 1 dans laquelle la résine époxyde polyfonctionnelle a un équivalent d'époxyde de 185 à 1500 et une masse moléculaire de 250 à 4000.